# EUROPÄISCHE PATENTSCHRIFT

(11) **EP 1 728 454 B1**
(45) Veröffentlichungstag und Bekanntmachung des Hinweises auf die Patenterteilung: **14.04.2010**
(21) Anmeldenummer: 06010329.8
(22) Anmeldetag: 19.05.2006
(51) Int. Cl.: A47C 23/00, A47C 27/06

(54) **Einzelfederelement**
Spring element
Elément de ressort

(30) Priorität: 30.05.2005 DE 202005008533 U
(43) Veröffentlichungstag der Anmeldung: 06.12.2006
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- EP-A- 0 864 279
- EP-A- 1 258 217
- EP-A- 1 269 894
- BE-A1- 803 850
- DE-U1- 9 412 330

## Beschreibung

Die Erfindung betrifft ein Einzelfederelement zur Konstruktion von Unterfederungen von Sitz- oder Liegemöbeln, insbesondere von Untermatratzen mit aufgelösten Oberflächen oder zum Einbau in Matratzen, aus einem zumindest teilweise geschlossenen elastischen Hohlkörper und mindestens einem Auflagerteller mit einer Befestigungsvorrichtung für den Hohlkörper.

Bekannte Federelemente, EP 1 269 894 A1, weisen zur Befestigung eines Auflagertellers auf einem Hohlkörper einfache Rasten auf, wobei durch die Elastizität des Hohlkörpers kein sehr fester Sitz des Auflagertellers auf dem Hohlkörper erzielt werden kann, so dass die Gefahr besteht, dass sich diese Verbindung auf Dauer oder bei starker Belastung der Unterfederung löst.

Aufgabe der Erfindung ist es, ein Einzelfederelement zur Verfügung zu stellen, bei dem der Auflagerteller dauerhaft fest auf einem Hohlkörper festgelegt ist.

Diese Aufgabe wird in Verbindung mit den Oberbegriffsmerkmalen erfindungsgemäß dadurch gelöst, dass die Befestigungsvorrichtung aus einem Stopfen und Teilsegmenten eines Rohrabschnittes zur Aufnahme des Stopfens besteht, wobei sich die Teilsegmente von der Rückseite des Auflagertellers axial nach innen durch eine Ausnehmung in den Hohlkörper erstrecken, die um ein elastisches Filmscharnier, bzw. eine elastische Knickstelle radial verschwenkbar an dem Auflagerteller angeformt sind und die in den Rohrabschnitt nach innen gerichtete Hebelarme aufweisen, die im in den Rohrabschnitt eingeführten Zustand des Stopfens von diesem so verschwenkt sind, dass durch die radial mitverschwenkten Teilsegmente eine formschlüssige Verriegelung des Hohlkörpers zwischen den Teilsegmenten und dem Auflagerteller erzeugt ist.

Diese vorteilhafte Konstruktion erlaubt es den von innen schlecht oder gar nicht zugänglichen Hohlkörper im Bereich seiner Ausnehmung für den einzuführenden Rohrabschnitt großflächig zu untergreifen, ohne Klemmkräfte im elastischen Hohlkörper erzeugen zu müssen, sodass diese Ausführungsform einer Befestigungsvorrichtung eine vollkommen kräftefreie Befestigung des Auflagertellers auf dem Hohlkörper ermöglicht, wenn dies gewünscht ist. Je nach Ausführungsform kann jedoch auch eine leichte Klemmung erwünscht sein und auch verwirklicht werden, um beispielsweise ein loses Spiel des Auflagertellers auf dem Hohlkörper zu verhindern.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform des Gegenstandes der Erfindung sind die Hebelarme etwa um 90° zur Längsachse des Rohrabschnittes oder geringfügig entgegen der Montagerichtung des Stopfens radial nach innen in den Rohrabschnitt ausgerichtet, sodass die Außenseiten der im Einbauzustand des Stopfens etwa um 90° verschwenkten Teilsegmente eine parallele Ebene zur Rückseite des Auflagertellers bilden, wodurch praktisch eine umlaufend unterbrochene Nut zur Aufnahme des Randes der Ausnehmung des Hohlkörpers erzeugt ist. Bei anderen Ausgestaltungen von Hohlkörpern kann die Befestigungsvorrichtung durch eine entsprechende Formgebung der Teilsegmente oder der Hebelarme einfach den erforderlichen Gegebenheiten angepasst werden.

Eine weitere bevorzugte Ausführungsform der Erfindung ist derart ausgestaltet, dass der Stopfen und die Hebelarme miteinander korrespondierende Rasten aufweisen, so dass der Stopfen im Einbauzustand gegen eine seiner Montagerichtung entgegengesetzte Bewegung verriegelt ist, wodurch sichergestellt wird, dass insbesondere bei einer starken Einfederung des Einzelfederelementes der Stopfen nicht von der gegenüberliegenden Seite des Hohlkörpers, etwa von der Aufnahme für ein Fußteil oder einem zweiten Stopfen eines gegenüberliegend angeordneten Auflagertellers, aus seinem zugehörigen Auflagerteller herausgedrückt werden kann.

Besonders vorteilhaft ist hier eine Ausführungsform, bei der die Rasten des Stopfens als stirnseitig ringförmig vorstehender Absatz ausgebildet sind und die Rasten der Hebelarme von deren Stirnseiten gebildet sind, so dass diese Rasten aufgrund ihrer elastischen Rückstellkraft des Filmscharniers bzw. der Knickstelle nach Einschieben des Stopfens hintereinander verrasten. Der dem Einzelfederelement zugehörige Hohlkörper kann rotationssymmetrisch oder auch achsensymmetrisch ausgebildet sein oder bei einer Ausführungsform als nur teilweise geschlossener elastischer Hohlkörper aus zusammengesetzten Einzelteilen bestehen, wie etwa Streifen oder Schalenteilen, die prinzipiell eine Montage einer Befestigung auch von innerhalb des Hohlkörpers erlauben würden.

Das erfinderische Einzelfederelement ist vorteilhafterweise an seinem oberen Ende mit einem Auflagerteller ausgestattet und an seinem unteren Bereich mit einem Fußteil zur Befestigung auf einer Unterlage oder einer Querleiste eines Bettrahmens. Es kann vorteilhafterweise jedoch bei einer Ausführung als Matratzeneinbauelement beidseitig mit Auflagertellern versehen sein, ebenso wie der Hohlkörper mit korrespondierenden Ausnehmungen zur Aufnahme des Rohrabschnittes der Auflagerteller versehen sein kann.

Nachfolgend sind zwei Ausführungsbeispiele der Erfindung anhand von Zeichnungen näher beschrieben. Es zeigen:
- Fig. 1: ein geschnittenes Federelement aus Auflagerteller und Hohlkörper mit betätigter Befestigungsvorrichtung,
- Fig. 2: die Bauteile der Fig. 1 in geschnittener Explosionsdarstellung und
- Fig. 3: eine Explosionsdarstellung eines als Matratzeneinbauelementes ausgebildeten Einzelfederelementes.

Das Einzelfederelement 1;11 besteht aus mindestens einem Auflagerteller 6 mit einer Befestigungsvorrichtung 2 und einem elastischen Hohlkörper 8.

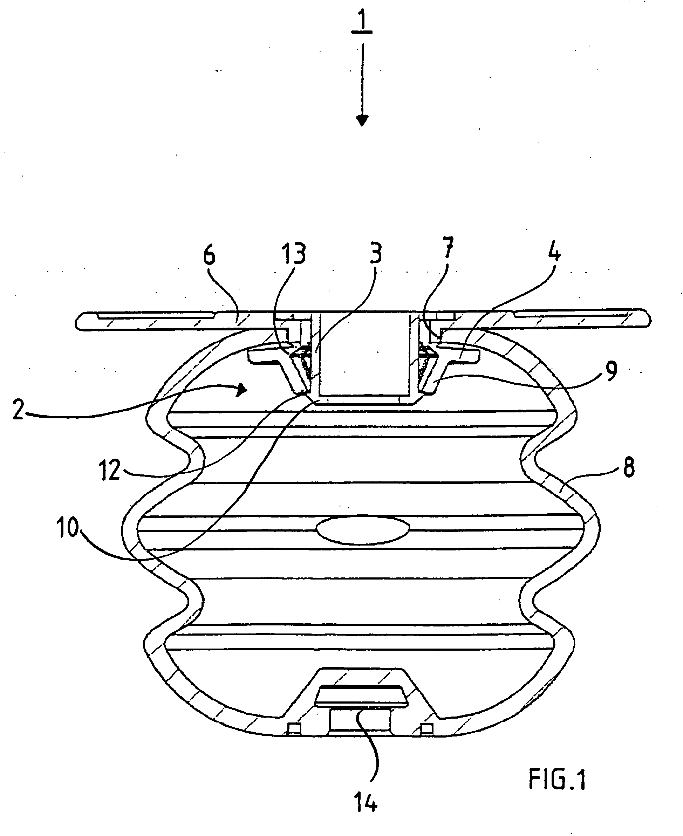

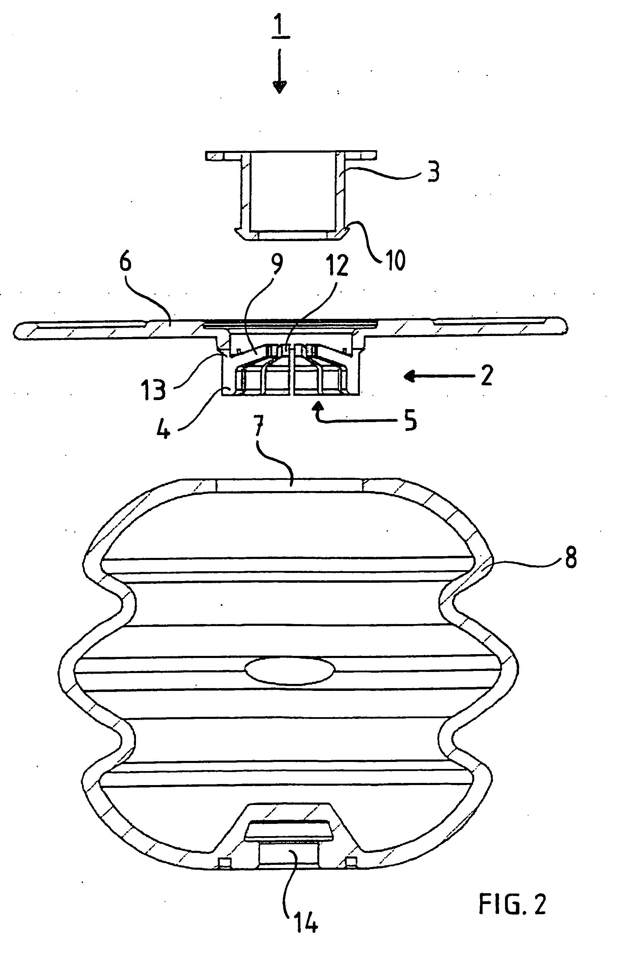

Ein Einzelfederelement 1, wie es in den Fig. 1 und 2 dargestellt ist, besteht aus einem im wesentlichen als rotationssymmetrischer Faltenbalg ausgebildeten Hohlkörper 8, der nach oben eine kreisrunde Ausnehmung 7 aufweist und nach unten eine Aufnahme 14 für ein Fußteil zur Befestigung des Hohlkörpers 8 auf einer Unterlage, wie etwa einem Querholm eines Bettrahmens. Der Auflagerteller 6 des Einzelfederelementes 1;11 ist ebenfalls rotationssymmetrisch ausgebildet und weist einen Rohrabschnitt 5 auf, der aus Teilsegmenten 4 besteht, die über ein elastisches Filmscharnier 13 bzw. eine elastische Knickstelle an dem Auflagerteller 6 angeformt sind. Die Teilsegmente 4 weisen im unverbauten Zustand etwa radial nach innen gerichtete Hebelarme 9 auf, die leicht entgegen der Montagerichtung des Stopfens 3 ausgerichtet sind. Der Stopfen 3 selber weist einen hohlzylindrischen Abschnitt auf, der stirnseitig einen umlaufenden Ring mit einer Montagephase aufweist, so dass bei der Montage des Stopfens 3 die Teilsegmente 4 über die Hebelarme 9 um die Knickstelle bzw. das elastische Filmscharnier 13 herum radial nach außen verschwenkt werden und die Stirnseiten der Hebelarme 9 als Rasten 12 ausgebildet sind, die hinter den Rasten 10 des Stopfens 3 einrasten und diesen dort gegen eine Bewegung entgegen der Montagerichtung verriegeln, wie dies in Fig. 1 dargestellt ist.

Zwischen der Rückseite des Auflagertellers 6 und den dieser zugewandten Flächen der Teilsegmente 4 wird auf diese Weise eine unterbrochene Nut erzeugt, in der der Rand der Ausnehmung 7 des Hohlkörpers 8 formschlüssig und je nach Ausführungsform mit mehr oder weniger Spiel behaftet gehalten oder auch eingeklemmt ist.

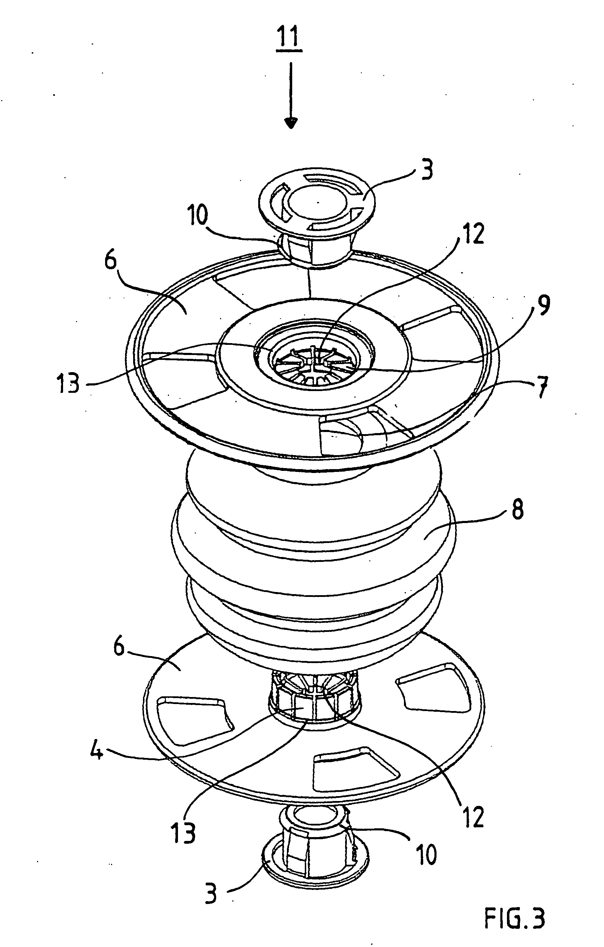

In Fig. 3 ist eine Ausführungsform des Einzelfederelementes 11 dargestellt, welches sich zum Einbau in Matratzen eignet und dazu mit einem oberen und einem unteren Auflagerteller 6 versehen ist, die beide mit der erfinderischen Befestigungsvorrichtung 2 an dem Hohlkörper 8 festgelegt sind.

## Patentansprüche

1. Einzelfederelement zur Konstruktion von Unterfederungen von Sitz- oder Liegemöbeln, insbesondere von Untermatratzen mit aufgelösten Oberflächen oder zum Einbau in Matratzen, aus einem zumindest teilweise geschlossenen elastischen Hohlkörper (8) und mindestens einem Auflagerteller (6) mit einer Befestigungsvorrichtung (2) für den Hohlkörper (8), **dadurch gekennzeichnet, dass** die Befestigungsvorrichtung (2) aus einem Stopfen (3) und Teilsegmenten (4) eines Rohrabschnittes (5) zur Aufnahme des Stopfens (3) besteht, die sich von der Rückseite des Auflagertellers (6) axial nach innen durch eine Ausnehmung (7) in den Hohlkörper (8) erstrecken und die um ein elastisches Filmscharnier (13) oder eine elastische Knickstelle radial verschwenkbar am Auflagerteller (6) angeformt sind und dass die Teilsegmente (4) in Randabschnitt (5) nach innen gerichtete Hebelarme (9) aufweisen, die im in den Rohrabschnitt (5) eingeführten Zustand des Stopfens (3) von diesem so verschwenkt sind, dass durch die radial mitverschwenkten Teilsegmente (4) eine formschlüssige Verriegelung des Hohlkörpers (8) erzeugt ist.

2. Einzelfederelement nach Anspruch 1, **dadurch gekennzeichnet, dass** die Hebelarme (9) etwa rechtwinklig zur Längssachse des Rohrabschnittes (5) oder geringfügig entgegen der Montagerichtung des Stopfens (3) radial nach innen ausgerichtet sind und dass die Außenseiten der im Einbauzustand des Stopfens (3) etwa rechtwinklig verschwenkten Teilsegmente (4) eine parallele Ebene zur Rückseite des Auflagertellers (6) bilden.

3. Einzelfederelement nach einem der vorgenannten Ansprüche, **dadurch gekennzeichnet, dass** der Stopfen (3) und die Hebelarme (9) miteinander korrespondierende Rasten (19; 12) aufweisen und dass der Stopfen (3) im Einbauzustand gegen eine seiner Montagerichtung entgegengesetzte Bewegung verriegelt ist.

4. Einzelfederelement nach Anspruch 3, **dadurch gekennzeichnet, dass** die Rasten (10) des Stopfens (3) als stirnseitiger, ringförmig vorstehender Absatz ausgebildet sind und die Rasten (12) der Hebelarme (9) von deren Stirnseiten gebildet sind.

5. Einzelfederelement nach einem der vorgenannten Ansprüche, **dadurch gekennzeichnet, dass** der Hohlkörper (8) rotationssymmetrisch als Faltenbalg ausgebildet ist.

6. Einzelfederelement nach einem der vorgenannten Ansprüche, **dadurch gekennzeichnet, dass** der Hohlkörper (8) mit einer Aufnahme (14) für ein Fußteil zur Befestigung auf einer Unterlage oder Querleiste ausgestattet ist.

7. Einzelfederelement nach einem der vorgenannten Ansprüche 1 bis 5, **dadurch gekennzeichnet, dass** es als Matratzeneinbauelement oben und unten mit einem Auflagerteller (6) und der Hohlkörper (8) mit korrespondierenden Ausnehmungen (7) versehen ist.

## Claims

1. Individual spring element for making up underspringing arrangements for furniture for sitting on or lying on, in particular mattress bases with discontinuous surfaces or for installing in mattresses, comprising an at least partially closed elastic hollow body (8) and at least one bearing plate (6) with a fastening device (2) for the hollow body (8), **characterized in that** the fastening device (2) comprises a stopper (3) and sub-segments (4) of a tube portion (5) for accommodating the stopper (3) which extend axially inwards from the rear side of the bearing plate (6), through an aperture (7), into the hollow body (8) and are integrally formed on the bearing plate (6) such that they can be pivoted radially about an elastic film hinge (13) or an elastic point of inflection, and **in that** the sub-segments (4) in tube portion (5) have inwardly directed lever arms (9) which, in the state in which the stopper (3) is introduced into the tube portion (5), have been pivoted by this stopper such that the radially pivoted-along sub-segments (4) give rise to form-fitting locking of the hollow body (8).

2. Individual spring element according to Claim 1, **characterized in that** the lever arms (9) are oriented approximately at right angles to the longitudinal axis of the tube portion (5) or radially inwards to a slight extent counter to the fitting direction of the stopper (3), and **in that** the outer sides of the sub-segments (4), which are pivoted approximately at right angles in the installed state of the stopper (3), form a plane which is parallel to the rear side of the bearing plate (6).

3. Individual spring element according to one of the preceding claims, **characterized in that** the stopper (3) and the lever arms (9) have catches (10;12) which correspond with one another, and **in that** the stopper (3), in the installed state, is locked in relation to a movement counter to its fitting direction.

4. Individual spring element according to Claim 3, **characterized in that** the catches (10) of the stopper (3) are designed in the form of an end-side shoulder which projects in annular form, and the catches (12) of the lever arms (9) are formed from the end sides of the latter.

5. Individual spring element according to one of the preceding claims, **characterized in that** the hollow body (8) is designed in a rotationally symmetrical manner in the form of a folding bellows.

6. Individual spring element according to one of the preceding claims, **characterized in that** the hollow body (8) is provided with a mount (14) for a foot part for fastening on an underlying surface or transverse slat.

7. Individual spring element according to one of preceding Claims 1 to 5, **characterized in that**, as a mattress-installation element it is provided at the top and bottom with a bearing plate (6), and the hollow body (8) is provided with corresponding apertures (7).

## Revendications

1. Elément de ressort individuel pour la construction de suspensions à ressorts de sièges ou de lits, en particulier de sommiers à surfaces séparées ou pour l'incorporation dans des matelas, constitué d'un corps creux élastique (8) au moins partiellement fermé et d'au moins un disque de recouvrement (6) avec un dispositif de fixation (2) pour le corps creux (8), **caractérisé en ce que** le dispositif de fixation (2) se compose d'un bouchon (3) et de segments partiels (4) d'une portion tubulaire (5) pour recevoir le bouchon (3), qui s'étendent depuis le côté arrière du disque de recouvrement (6) axialement vers l'intérieur à travers un évidement (7) dans le corps creux (8) et qui sont façonnés sur le disque de recouvrement (6) de manière à pouvoir pivoter radialement autour d'une charnière à film élastique (13) ou d'un point d'inflexion élastique, et **en ce que** les segments partiels (4) dans la portion tubulaire (5) présentent des bras de levier (9) orientés vers l'intérieur, qui sont pivotés depuis le bouchon (3) lorsque celui-ci est introduit dans la portion tubulaire (5), de telle sorte qu'un verrouillage par engagement par correspondance géométrique du corps creux (8) soit produit par les segments partiels (4) pivotés ensemble radialement.

2. Elément de ressort individuel selon la revendication 1, **caractérisé en ce que** les bras de levier (9) sont orientés approximativement à angle droit par rapport à l'axe longitudinal de la portion tubulaire (5) ou légèrement à l'encontre de la direction de montage du bouchon (3) radialement vers l'intérieur et **en ce que** les côtés extérieurs des segments partiels (4) pivotés approximativement à angle droit dans l'état inséré du bouchon (3) forment un plan parallèle au côté arrière du disque de recouvrement (6).

3. Elément de ressort individuel selon l'une quelconque des revendications précédentes, **caractérisé en ce que** le bouchon (3) et les bras de levier (9) présentent des cliquets (10;12) correspondant les uns avec les autres et **en ce que** le bouchon (3) est verrouillé dans l'état inséré à l'encontre d'un mouvement opposé à sa direction de montage.

4. Elément de ressort individuel selon la revendication 3, **caractérisé en ce que** les cliquets (10) du bouchon (3) sont réalisés sous forme d'épaulement saillant annulaire du côté frontal, et les cliquets (12) des bras de levier (9) sont formés par leurs côtés frontaux.

5. Elément de ressort individuel selon l'une quelconque des revendications précédentes, **caractérisé en ce que** le corps creux (8) est réalisé avec une symétrie de révolution sous forme de soufflet.

6. Elément de ressort individuel selon l'une quelconque des revendications précédentes, **caractérisé en ce que** le corps creux (8) est muni d'un logement (14) pour une partie de base pour la fixation à un support ou à une baguette transversale.

7. Elément de ressort individuel selon l'une quelconque des revendications précédentes 1 à 5, **caractérisé en ce qu'**il est pourvu, en tant qu'élément à insérer dans un matelas, en haut et en bas, d'un disque de recouvrement (6) et le corps creux (8) est pourvu d'évidements (7) correspondants.
